# EUROPEAN PATENT SPECIFICATION

(11) **EP 4 282 739 B1**
(45) Date of publication and mention of the grant of the patent: **25.12.2024**
(21) Application number: 23156728.0
(22) Date of filing: 15.02.2023
(51) Int. Cl.: B62J 37/00, B62K 11/04, B62M 7/02

(54) **STRADDLED VEHICLE**
GRÄTSCHSITZFAHRZEUG
VÉHICULE À SELLE

(30) Priority: 27.05.2022 JP 2022087224
(43) Date of publication of application: 29.11.2023
(73) Proprietor: Yamaha Hatsudoki Kabushiki Kaisha, Iwata-shi, Shizuoka 438-8501 (JP)
(72) Inventor: TAKEDA, Satoshi, Iwata-shi, 4388501 (JP); UEDA, Takumi, Iwata-shi, 4388501 (JP)
(74) Representative: Studio Torta S.p.A.

(56) References cited:
- EP-A1- 2 305 547
- JP-A- H0 586 994
- JP-U- S6 258 278
- US-A1- 2010 051 369

## Description

### Technical Field

The present invention relates to a straddled vehicle.

### Prior Art

Japanese Unexamined Patent Application Publication No. Hei 5-86994 discloses a straddled vehicle. The straddled vehicle has a frame, a fuel tank, an engine, an exhaust pipe connected to the engine, and a canister receiving fuel vapor from the fuel tank. In this straddled vehicle, the exhaust pipe connected to the engine extends rearward along one side surface of a cylinder block of the engine. The canister is disposed in front of a crankcase of the engine on the side opposite the exhaust pipe.

In recent years, the size of the canister has been increased due to tightening of regulations on emission of the fuel vapor. For example, the larger the volume of activated carbon in the canister is, the higher the temperature of the canister is when the fuel vapor is adsorbed by the activated carbon. In case that the temperature of the canister rises, the adsorption efficiency, with which the activated carbon adsorbs the fuel vapor in the canister, decreases.

In the above-described conventional straddled vehicle, the canister is disposed in front of the crankcase and the canister is cooled by traveling wind while the straddled vehicle is running. On the other hand, there is no means for suppressing temperature rise of the canister while the straddled vehicle is stationary. Therefore, when the conventional straddled vehicle is stationary, the temperature of the canister may rise and the adsorption efficiency of the canister may decrease.
EP-A-2305547 and JP-U-S6258278 disclose a straddled vehicle according to the preamble of claim 1.

An object of the present invention is to provide a straddled vehicle that can effectively reduce temperature rise of a canister.

### Description of the invention

A straddled vehicle according to one aspect of the present invention includes a frame, a fuel tank, a side stand, an engine, an exhaust pipe, and a canister. The fuel tank is mounted on the frame. The side stand is mounted to the frame on one side in a vehicle width direction. The engine is mounted to the frame. The engine includes a crankcase cover. The exhaust pipe is connected to the engine. The exhaust pipe is disposed on the other side in the vehicle width direction.

The canister is disposed on the one side in the vehicle width direction entirely in front of the crankcase cover in a vehicle side view. The canister receives fuel vapor from the fuel tank. The canister is disposed inside an outer surface of the crankcase cover and faces the exhaust pipe in a vehicle front view. The canister is mounted to the engine so that an upper portion of the canister and a lower portion of the canister overlap the exhaust pipe in a vehicle side view.

In the straddled vehicle according to this aspect, the canister is disposed in front of the crankcase cover and is disposed on the opposite side of the exhaust pipe in the vehicle width direction. In the vehicle front view, the canister is disposed inside an outer surface of the crankcase cover and faces the exhaust pipe. In a vehicle side view, the upper portion of the canister and the lower portion of the canister overlap the exhaust pipe.

Generally, when the straddled vehicle is stationary, air convection is generated around the exhaust pipe due to heat of the exhaust pipe. In the above straddled vehicle, the canister can be effectively cooled with the air convection, which is generated around the exhaust pipe when the straddled vehicle is stationary, by disposing the canister relative to the exhaust pipe as described above. Thereby, an adsorption efficiency of the canister can be improved. In other words, the straddled vehicle is capable of effectively reducing temperature rise of the canister.

The canister can be disposed to face the exhaust pipe when viewed from the front of the vehicle body so that the canister and the exhaust pipe do not overlap the frame when viewed from the side of the vehicle body. Thereby, the air convection can be effectively circulated because the air convection is not blocked by the frame.

The engine can include a crankcase, the crankcase cover covering an opening of the crankcase, and a cylinder block disposed on an upper portion of the crankcase. In this case, the canister is disposed in front of the cylinder block in the vehicle side view.

Thereby, the canister can be effectively cooled with not only the air convection generated by the heat of the exhaust pipe but also the air convection generated by the heat of the cylinder block. In other words, the straddled vehicle is capable of effectively reducing the temperature rise of the canister.

The engine can include a crankcase, the crankcase cover covering an opening of the crankcase, a cylinder block disposed an upper portion of the crankcase, and a cylinder head connected to an upper portion of the cylinder block. In this case, one end of the exhaust pipe is connected to the cylinder head. The canister is disposed below the one end of the exhaust pipe in the vehicle side view.

In this configuration, the cylinder block is disposed between the crankcase and the cylinder head in a vertical direction. The cylinder block is disposed between the crankcase cover and the cylinder head in the vertical direction, because the crankcase cover covers the opening of the crankcase. The cylinder block is disposed between the canister and the cylinder head in the vertical direction, because the canister is disposed in front of the crankcase cover. In other words, the canister is disposed below the cylinder block. Thereby, the canister can be cooled from an upper side thereof with the air convection generated by the heat of the cylinder block.

Also, the one end of the exhaust pipe is connected to the cylinder head. The exhaust pipe is disposed to face the canister. In other words, the exhaust pipe extends from the cylinder head toward the canister disposed below the cylinder block. Thereby, the canister can be cooled from the upper side thereof and from the side thereof with the air convection generated by the heat of the exhaust pipe. Thus, the canister can be effectively cooled with the air convection generated by the heat of the cylinder block and the heat of the exhaust pipe. In other words, the straddled vehicle is capable of effectively reducing the temperature rise of the canister.

A catalyzer can be connected to the other end of the exhaust pipe. In this case, a lower portion of the canister overlaps the exhaust pipe on the upstream side of the catalyzer in the vehicle side view.

In this configuration, the catalyzer generates heat due to a catalytic reaction and the heat of the catalyzer generates the air convection. The canister can be cooled from a lower side thereof with the air convection generated by the heat of the catalyzer, because the lower portion of the canister is positioned upstream from the catalyzer. In addition, the lower portion of the canister can be cooled with the air convection generated by the heat of the exhaust pipe, because the lower portion of the canister overlaps the exhaust pipe in the vehicle side view. Thus, the straddled vehicle is capable of effectively reducing the temperature rise of the canister with the air convection generated by the heat of the catalyzer and the heat of the exhaust pipe.

The straddled vehicle can further include a mounting structure configured to mount the canister to the crankcase. Thereby, the canister can be mounted to the crankcase or be removed from the crankcase.

The mounting structure can include a first engaging portion provided on the crankcase, a bracket including a first engaged portion with which the first engaging portion engages, and a holding member configured to hold the canister to the bracket. Thereby, the canister can be easily mounted to the crankcase or be easily removed from the crankcase.

The first engaging portion can be a male threaded portion and the first engaged portion can be a hole portion through which the male threaded portion is inserted. In this case, the bracket is mounted to the crankcase by screwing a nut onto the male threaded portion in a state where the male threaded portion is inserted through the hole. Thereby, the mounting structure can be configured with a simple structure.

The bracket can include a bracket body and a second engaged portion provided on the bracket body. In this case, the holding member is an elastic member and includes a second engaging portion which elastically engages with the second engaged portion. The canister is held by the bracket body and the holding member. Thereby, the mounting structure can be configured with a simple structure.

The canister can include a canister body, a charge port provided in an upper portion of the canister body and is configured to guide the fuel vapor from the fuel tank to the inside of the canister body, and a purge port provided in the upper portion of the canister body and is configured to guide the fuel of the canister body to the engine. Activated carbon of the canister can be effectively utilized by configuring the canister as described above, because specific gravity of the fuel vapor is generally larger than the specific gravity of air

The canister and the engine can be mounted to the frame as an engine assembly in a state where the canister is mounted to the engine. Thereby, the canister and the engine can be easily mounted on the frame as the engine assembly.

### Advantageous Effects of Invention

According to the present invention, a straddled vehicle is capable of effectively reducing temperature rise of a canister.

### Brief description of the drawings

FIG. 1 is a side view of a straddled vehicle.
FIG. 2 is a top view of the straddled vehicle.
FIG. 3 is a side view for explaining the layout of an engine and a canister
FIG. 4 is a front view for explaining the layout of the engine and the canister.
FIG. 5A is a top view for explaining the canister and a mounting structure.
FIG. 5B is a side view for explaining the canister and the mounting structure.
FIG. 5C is a side view for explaining the canister and the mounting structure.
FIG. 5D is a side view for explaining the canister and the mounting structure.

### Embodiments of the invention

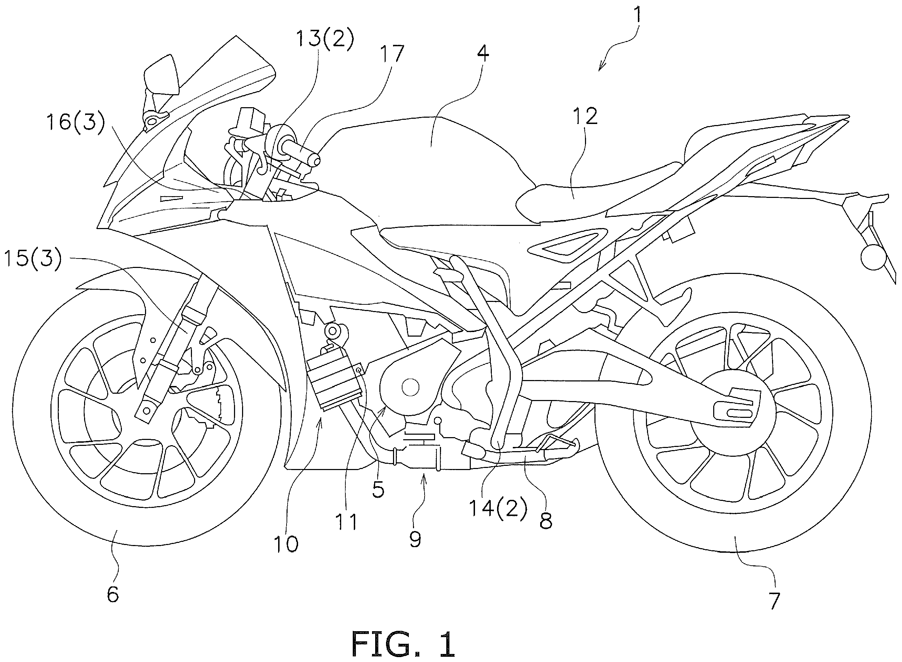

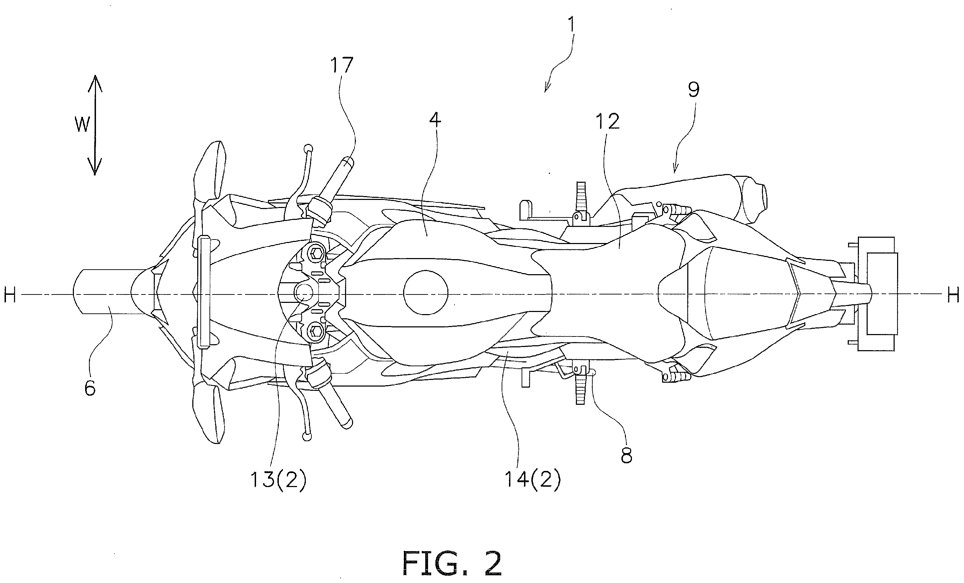

A straddled vehicle according to an embodiment will be described below with reference to drawings. As shown in FIGS. 1 and 2, the straddled vehicle 1 includes a vehicle body frame 2, a steering device 3, a fuel tank 4, an engine 5 (see FIG. 1), a front wheel 6, and a rear wheel 7 (See FIG. 1).

The straddled vehicle 1 further includes a side stand 8, an exhaust device 9, a canister 10 (see FIG. 1), and a mounting structure 11 (see FIG. 1). In FIG. 1, side cowls are removed to show the canister 10.

In this embodiment, in a state where the rider seats on a seat 12, a front direction of the rider (a left side in FIG. 2), a rear direction of the rider (a right side in FIG. 2), a left direction of the rider (a lower side in FIG. 2), and a right direction of the rider (a upper side in FIG. 2) respectively correspond to front, rear, left, and right directions of the straddled vehicle 1. The left-right direction corresponds to a vehicle width direction W of the vehicle.

For example, as shown in FIG. 2, when a vehicle center plane H extending in the front-rear direction is defined on the straddled vehicle 1, the vehicle width direction W is defined in a direction orthogonal to the vehicle center plane H. As shown in FIG. For example, the vehicle width direction W corresponds to the left-right direction with respect to the vehicle center plane H of the vehicle.

An upper direction of the rider (an upper side in FIG. 1) corresponds to an upper direction of the straddled vehicle 1. A lower direction of the straddled vehicle 1 (a lower side in FIG. 1) is a direction opposite to the upper direction of the straddled vehicle 1. A vehicle side view shows a state where a side portion of the straddled vehicle 1 is viewed from the left direction thereof or the right direction thereof. For example, FIG. 1 corresponds to the vehicle side view. A vehicle front view shows a state where a front portion of the straddled vehicle 1 is viewed from the front direction thereof. For example, FIG. 2 corresponds to the vehicle front view.

As shown in FIGS. 1 and 2, the vehicle body frame 2 includes a head pipe 13 and a main frame 14. The main frame 14 is connected to the head pipe 13. The main frame 14 extends rearward from the head pipe 13. As shown in FIG. 2, the vehicle center plane H passes through the head pipe 13 in the front-rear direction in a vehicle upper view. The vehicle center plane H is perpendicular to the ground.

As shown in FIG. 1, the steering device 3 includes a front fork 15, a steering shaft 16 and a handle member 17. The front fork 15 is rotatably supported with respect to the head pipe 13. The steering shaft 16 is connected to the front fork 15. The handle member 17 is connected to the steering shaft 16. The fuel tank 4 is mounted to the vehicle body frame 2. For example, the fuel tank 4 is mounted to an upper portion of the main frame 14.

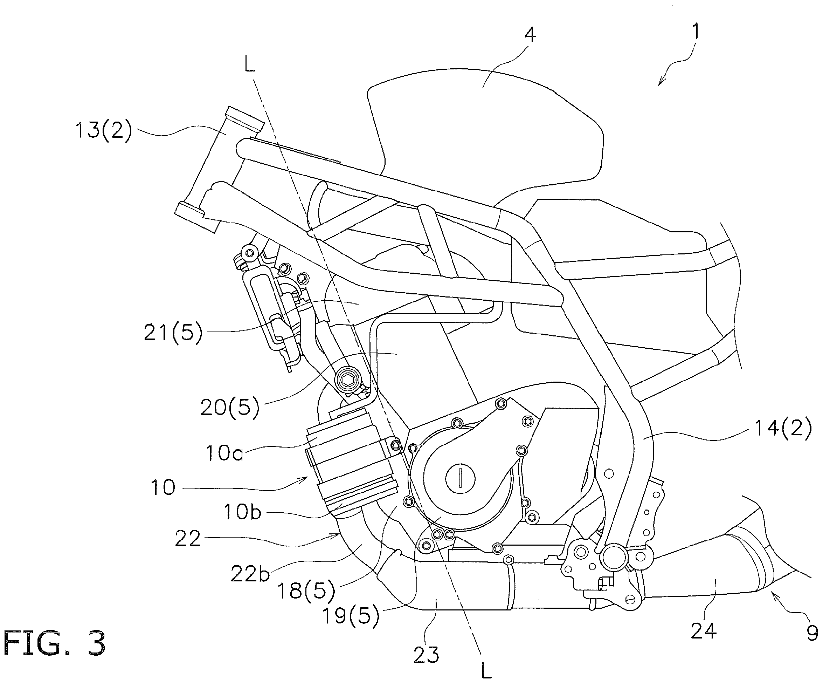

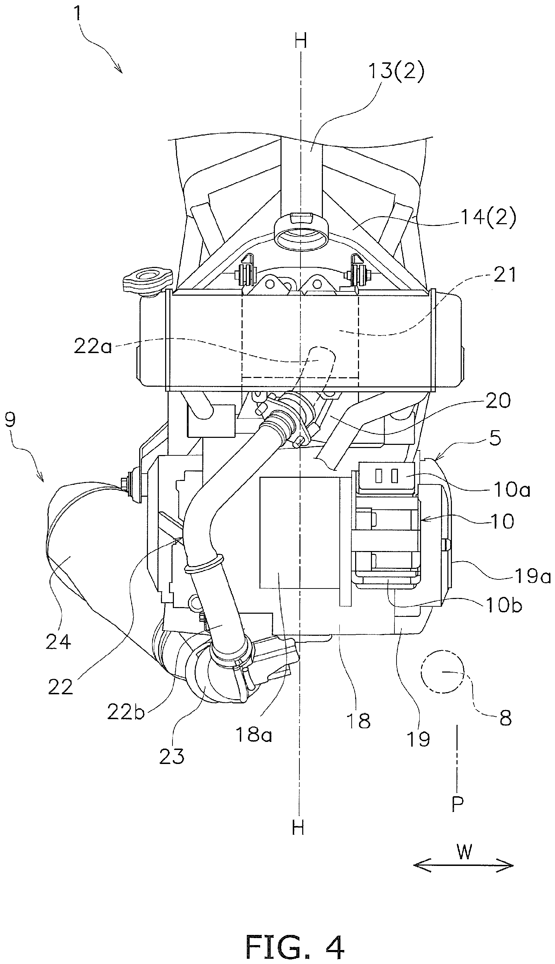

As shown in FIG. 1, the engine 5 is mounted on the vehicle body frame 2. For example, the engine 5 is mounted to a lower portion of the main frame 14. As shown in FIGS. 3 and 4, the engine 5 includes a crankcase 18, a crankcase cover 19, a cylinder block 20, and a cylinder head 21.

The crankcase 18 is mounted to the main frame 14. In a state where the crankcase 18 is mounted to the main frame 14, the crankcase 18 opens outward in the vehicle width direction W. For example, the crankcase 18 opens in a direction away from the vehicle center plane H in the vehicle width direction W.

The crankcase cover 19 is disposed on one side in the vehicle width direction W. For example, the crankcase cover 19 is disposed on the left side of the vehicle body frame 2. Specifically, the crankcase cover 19 is disposed on the left side of the vehicle center plane H. The crankcase cover 19 is mounted to the crankcase 18. The crankcase cover 19 covers an opening of the crankcase 18. The cylinder block 20 is disposed on an upper portion of the crankcase 18. The cylinder head 21 is connected to an upper portion of the cylinder block 20

As shown in FIG. 1, the front wheel 6 is rotatably supported by front forks 15. The rear wheel 7 is rotatably supported by the vehicle body frame 2, for example, the main frame 14. The rear wheel 7 is rotated by driving force from the engine 5.

As shown in FIG. 1, the side stand 8 is mounted to the vehicle body frame 2. For example, as shown in FIG. 2, the side stand 8 is mounted to the vehicle body frame 2 on the one side in the vehicle width direction W. Specifically, the side stand 8 is mounted to the lower portion of the main frame 14. The side stand 8 is disposed on the left side of the vehicle body frame 2. For example, the side stand 8 is disposed on the left side of the vehicle center plane H. The side stand 8 swings with respect to the main frame 14.

As shown in FIGS. 3 and 4, the exhaust device 9 includes an exhaust pipe 22, a catalyzer 23 and a muffler 24. The exhaust pipe 22 is mounted to the vehicle body frame 2. The exhaust pipe 22 is mounted to the main frame 14. The exhaust pipe 22 is connected to the engine 5.

As shown in FIG. 4, the exhaust pipe 22 is disposed on one side in the vehicle width direction W. For example, the exhaust pipe 22 is disposed on a right side of the vehicle body frame 2. Specifically, the exhaust pipe 22 is disposed on the right side of the vehicle center plane H. One end of the exhaust pipe 22, for example, an upper end portion 22a of the exhaust pipe 22 is connected to the cylinder head 21. The exhaust pipe 22 extends downward from a front portion of the engine 5, for example, from a front portion of the cylinder head 21. The exhaust pipe 22 extends rearward along the lower portion of the main frame 14 (see FIG. 1).

The catalyzer 23 is connected to the other end of the exhaust pipe 22, for example, a lower end portion 22b of the exhaust pipe 22. The catalyzer 23 is disposed between the exhaust pipe 22 and the muffler 24. The muffler 24 is connected to the catalyzer 23. The catalyzer 23 can be disposed inside one of the exhaust pipe 22 and the muffler 24 as long as the catalyzer 23 is disposed between the exhaust pipe 22 and the muffler 24. In this case, the muffler 24 is connected to the exhaust pipe 22.

The canister 10 shown in FIG. 1 receives the fuel vapor of the fuel tank 4. The canister 10 is mounted to the engine 5. The canister 10 is mounted to the engine 5 via the mounting structure 11 as described below. The canister 10 and the engine 5 are mounted to the vehicle body frame 2, for example, the main frame 14 as an engine assembly in a state where the canister 10 mounted to the engine 5.

As shown in FIG. 3, the canister 10 is disposed in front of the crankcase cover 19 in a state where the canister 10 and the engine 5 mounted to the main frame 14. As shown in FIG. 4, the canister 10 is disposed on the one side in the vehicle width direction W described above. For example, the canister 10 is disposed on the left side of the vehicle body frame 2. Specifically, the canister 10 is disposed on the left side of the vehicle center plane H.

As shown in FIG. 4, the canister 10 is disposed on a side of a protruding portion 18a of the crankcase 18. For example, the canister 10 is disposed on the left side of the protruding portion 18a of the crankcase 18, that is, on the side stand 8 side, in the vehicle front view.

The canister 10 is disposed inside an outer side surface 19a of the crankcase cover 19 in the vehicle front view. For example, the canister 10 is disposed between the vehicle center plane H and the outer side surface 19a of the crankcase cover 19. Specifically, the canister 10 is disposed between the vehicle center plane H and a plane P. The plane P is parallel to the vehicle center plane H and is in contact with an outermost surface of the crankcase cover 19.

As shown in FIG. 3, the canister 10 is disposed so that an upper portion 10a of the canister 10 and a lower portion 10b of the canister 10 overlap the exhaust pipe 22 in the vehicle side view, in a state where the canister 10 and the engine 5 are mounted to the main frame 14.

The canister 10 is disposed to face the exhaust pipe 22 in the vehicle front view so that the canister 10 and the exhaust pipe 22 do not overlap the main frame 14 in the vehicle side view. In other words, the canister 10 is disposed to face the exhaust pipe 22 in the vehicle front view in a state where the main frame 14 is not disposed between the canister 10 and the exhaust pipe 22.

As shown in FIG. 3, the canister 10 is disposed in front of the cylinder block 20 in the vehicle side view. For example, the canister 10 is disposed in front of a straight line L, which is defined by a front surface of the cylinder block 20, in the vehicle side view. The straight line L contacts the front surface of the cylinder block 20 at least two points.

As shown in FIG. 4, the canister 10 is disposed below one end of the exhaust pipe 22 , for example, the upper end portion 22a of the exhaust pipe 22 in the vehicle side view. The canister 10 is disposed above the catalyzer 23.

As shown in FIGS. 3 and 4, the lower portion 10b of the canister 10 is disposed above the catalyzer 23. As shown in FIG. 3, the lower portion 10b of the canister 10 overlaps the exhaust pipe 22 on a side of the lower end portion 22b of the exhaust pipe 22 in the vehicle side view. The lower portion 10b of the canister 10 overlaps the exhaust pipe 22 on an upstream side of the catalyzer 23 in the exhaust device 9.

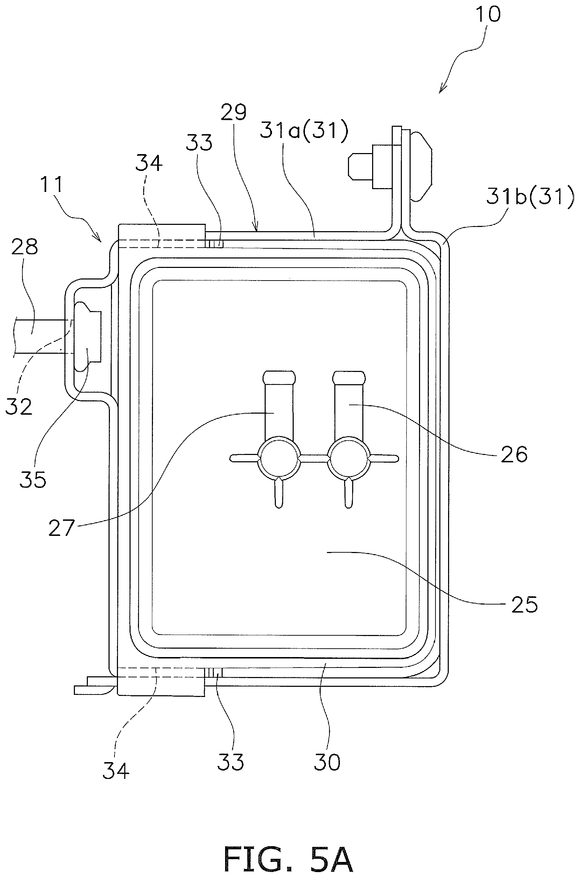

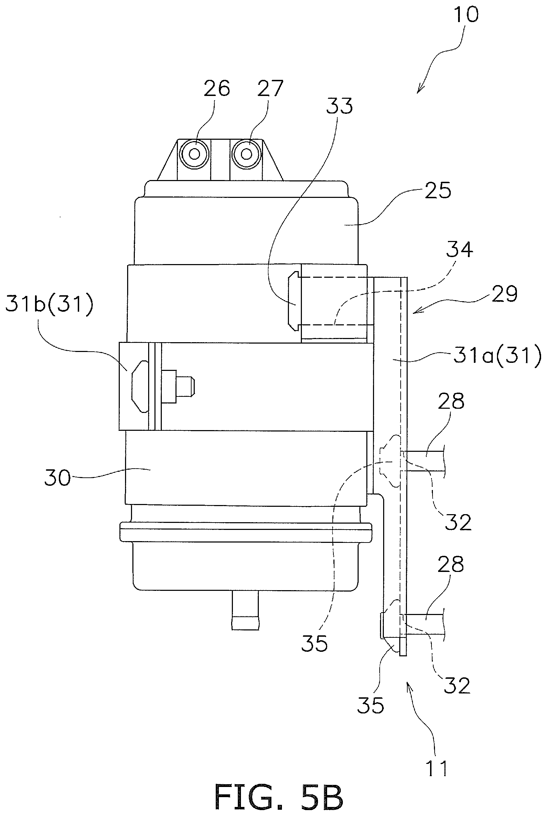

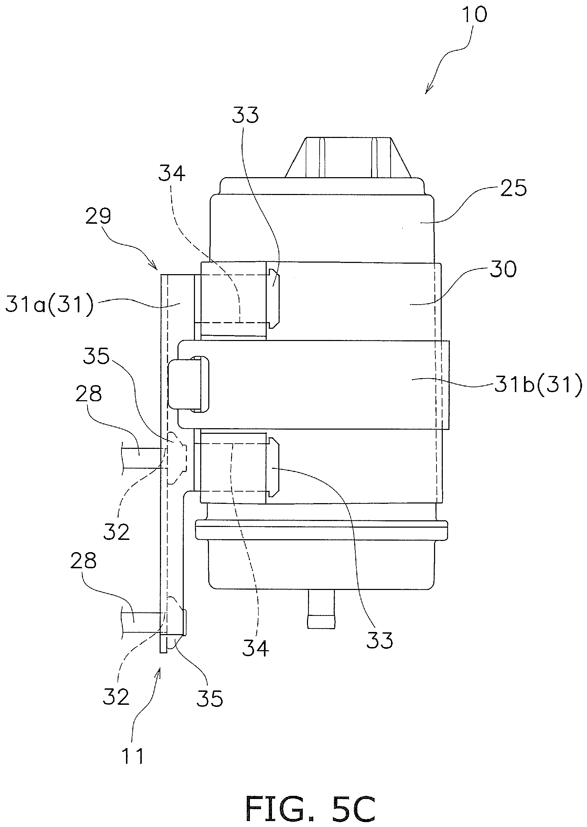

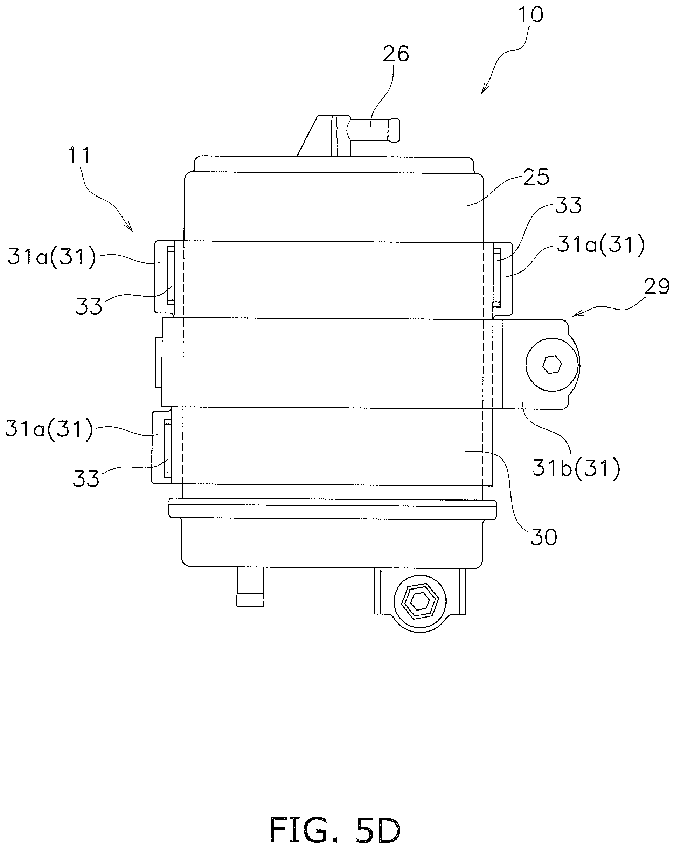

As shown in FIGS. 5A-5D, the canister 10 includes a canister body 25, a charge port 26, and a purge port 27. Activated carbon is disposed in the canister body 25. For example, an outer shape of the canister body 25 is formed in a rectangular parallelepiped shape. The canister body 25 is disposed such that the longest side of the canister body 25 is aligned with the straight line L (see FIG. 3). In other words, the canister body 25 is used in a vertically placed state.

As shown in FIG. 5A, the charge port 26 is provided on the upper portion of the canister body 25. The charge port 26 guides the fuel vapor from the fuel tank 4 into the canister body 25. The purge port 27 is provided in the upper portion of the canister body 25. The purge port 27 guides fuel of the canister body 25 to the engine 5.

As shown in FIGS. 5A-5D, the mounting structure 11 is used to mount the canister 10 to the crankcase 18. The mounting structure 11 includes a male threaded portion 28 (an example of a first engaging portion), a bracket 29, and a holding member 30. The male threaded portion 28 is provided on the crankcase 18.

As shown in FIGS. 5A to 5C, the bracket 29 includes a bracket body 31, a hole portion 32 (an example of a first engaged portion), and a plurality of engaged protrusions 33 (an example of a second engaged portion). The bracket body 31 is mounted to the crankcase 18.

As shown in FIGS. 5A-5D, the bracket body 31 includes a first bracket 31a and a second bracket 31b. The first bracket 31a is mounted to the crankcase 18. The second bracket 31b is mounted to the first bracket 31a.

As shown in FIGS. 5A to 5C, the hole portion 32 penetrates the bracket body 31. For example, a plurality of hole portions 32 penetrate the first bracket 31a. A plurality of male threaded portions 28 are respectively inserted into the plurality of hole portions 32. In this state, the first bracket 31a is mounted to the crankcase 18 by respectively screwing a plurality of nuts 35 onto the plurality of male threaded portions 28. The plurality of engaged protrusions 33 are provided on the first bracket 31a. The plurality of engaged protrusions 33 lock the holding member 30.

The holding member 30 is used to hold the canister 10 to the bracket 29. For example, as shown in FIGS. 5A-5D, the holding member 30 is an elastic member. The holding member 30 covers the canister body 25. The holding member 30 is elastically engaged with the plurality of engaged protrusions 33.

As shown in FIGS. 5A-5C, the holding member 30 includes an engaging hole 34 (an example of a second engaging portion). For example, the plurality of engaging holes 34 are respectively engaged with the plurality of engaged protrusions 33. The plurality of engaging holes 34 are respectively fitted into the plurality of engaged protrusions 33 in a state where the holding member 30 covers the canister body 25. Thereby, the canister body 25 is held by the first bracket 31a and the holding member 30.

In this state, the second bracket 31b is mounted to the first bracket 31a from outside of the holding member 30. Thereby, the canister body 25 and the holding member 30 are sandwiched between the first bracket 31a and the second bracket 31b.

In the straddled vehicle 1 configured as described above, the canister 10 is disposed in front of the crankcase cover 19 and is disposed on the opposite side of the exhaust pipe 22 in the vehicle width direction W. The canister 10 is disposed inside the outer surface of the crankcase cover 19 and faces the exhaust pipe 22 in the vehicle front view. The upper portion of the canister 10 and the lower portion of the canister 10 overlap the exhaust pipe 22 in the vehicle side view. With this configuration, the adsorption efficiency of the canister 10 can be improved. In other words, the temperature rise of the canister 10 can be effectively reduced in the straddled vehicle 1.

### Industrial Applicability

The present invention is applicable to a straddled vehicle including a canister.

### REFERENCE SIGNS LIST

1 a straddled vehicle
2 a body frame
4 a fuel tank
8 a side stand
5 an engine
10 a canister
11 a mounting structure
18 a crankcase
19 a crankcase cover
20 a cylinder block
21 a cylinder head
22 an exhaust pipe
23 a catalyzer
25 a canister body
26 a charge port
27 a purge port
28 a male threaded portion
29 a bracket
30 a holding member
31 a bracket body
32 a hole portion
33 an engaged protrusion
34 an engaging hole
H a vehicle center plane

## Claims

1. A straddled vehicle (1) comprising:
a frame (2);
a fuel tank (4) mounted on the frame (2);
a side stand (8) mounted to the frame (2) on one side in a vehicle width direction;
an engine (5) mounted to the frame (2) and including a crankcase cover (19); and
an exhaust pipe (22) connected to the engine and disposed on the other side in the vehicle width direction;
a canister (10) receiving fuel vapor from the fuel tank (4); the canister (10) is disposed inside an outer surface of the crankcase cover (19) and faces the exhaust pipe (22) in a vehicle front view; and
the canister (10) is mounted to the engine (5) so that an upper portion of the canister (10) and a lower portion of the canister (10) overlap the exhaust pipe (22) in a vehicle side view, **characterized in that** the canister (10) is entirely disposed on the one side in the vehicle width direction in front of the crankcase cover (19) in a vehicle side view.

2. The straddled vehicle according to claim 1, wherein
the canister (10) is disposed to face the exhaust pipe (22) in the vehicle front view so that the canister (10) and the exhaust pipe (22) do not overlap the frame in the vehicle side view.

3. The straddled vehicle according to claim 1, wherein
the engine (5) includes a crankcase (18), the crankcase cover (19) covering an opening of the crankcase (18), and a cylinder block (20) disposed on an upper portion of the crankcase (18); and
the canister (10) is disposed in front of the cylinder block (20) in the vehicle side view.

4. The straddled vehicle according to claim 1, wherein
the engine (5) includes a crankcase (18), the crankcase cover (19) covering an opening of the crankcase (18), a cylinder block (20) disposed on an upper portion of the crankcase (18), and a cylinder head (21) connected to an upper portion of the cylinder block (20);
one end of the exhaust pipe (22) is connected to the cylinder head (21); and
the canister (10) is disposed below the one end of the exhaust pipe (22) in the vehicle side view.

5. The straddled vehicle according to claim 4, wherein
a catalyzer (23) is connected to the other end of the exhaust pipe (22); and
a lower portion of the canister (10) overlaps the exhaust pipe (22) on the upstream side of the catalyzer (23) in the vehicle side view.

6. The straddled vehicle according to claim 1, further comprising:
a mounting structure (11) configured to mount the canister (10) to the crankcase (18).

7. The straddled vehicle according to claim 6, wherein
the mounting structure (11) includes a first engaging portion (28) provided on the crankcase (18), a bracket (29) including a first engaged portion (32) with which the first engaging portion (28) engages, and a holding member (30) configured to hold the canister (10) to the bracket (29).

8. The straddled vehicle according to claim 7, wherein
the first engaging portion (28) is a male threaded portion (28),
the first engaged portion (32) is a hole portion (32) through which the male threaded portion (28) is inserted;
the bracket (29) is mounted to the crankcase (18) by screwing a nut onto the male threaded portion (28) in a state where the male threaded portion (28) is inserted through the hole.

9. The straddled vehicle according to claim 7, wherein
the bracket (29) includes a bracket body (31) and a second engaged portion provided on the bracket body (31);
the holding member (30) is an elastic member and includes a second engaging portion (34) which elastically engages with the second engaged portion (33); and
the canister (10) is held by the bracket body (31) and the holding member (30).

10. The straddled vehicle according to claim 1, wherein
the canister (10) includes a canister body (25), a charge port (26) provided in an upper portion of the canister body (25) and configured to guide the fuel vapor from the fuel tank (4) to the inside of the canister body (25), and a purge port (27) provided in the upper portion of the canister body (25) and configured to guide fuel of the canister body (25) to the engine (5).

11. The straddled vehicle according to any one of claims 1 to 10,
the canister (10) and the engine (5) are mounted to the frame (2) as an engine assembly in a state where the canister (10) is mounted to the engine (5).

## Patentansprüche

1. Spreizsitz-Fahrzeug (1), das umfasst:
einen Rahmen (2);
einen Kraftstofftank (4), der an dem Rahmen (2) angebracht ist;
einen Seitenständer (8), der an dem Rahmen (2) an einer Seite in einer Fahrzeug-Breitenrichtung angebracht ist;
einen Motor (5) der an dem Rahmen (2) angebracht ist und einen Kurbelgehäuse-Deckel (19) enthält; sowie
ein Auspuffrohr (22), das mit dem Motor verbunden und an der anderen Seite in der Fahrzeug-Breitenrichtung angeordnet ist;
einen Behälter (10) zum Aufnehmen von Kraftstoffnebel aus dem Kraftstofftank (4);
wobei der Behälter (10) innerhalb einer Außenfläche des Kurbelgehäuse-Deckels (19) angeordnet und, in einer Fahrzeug-Vorderansicht, dem Auspuffrohr (22) zugewandt ist; und
der Behälter (10) so an dem Motor (5) angebracht ist, dass ein oberer Abschnitt des Behälters (10) und ein unterer Abschnitt des Behälters (10), in einer Fahrzeug-Seitenansicht, das Auspuffrohr (22) überlappen,
**dadurch gekennzeichnet, dass** der Behälter (10), in einer Fahrzeug-Seitenansicht, vollständig an der einen Seite in der Fahrzeug-Breitenrichtung vor dem Kurbelgehäuse-Deckel (19) angeordnet ist.

2. Spreizsitz-Fahrzeug nach Anspruch 1, wobei
der Behälter (10), in der Fahrzeug-Vorderansicht, so angeordnet ist, dass er dem Auspuffrohr (22) zugewandt ist, so dass der Behälter (10) und das Auspuffrohr (22), in der Fahrzeug-Seitenansicht, den Rahmen nicht überlappen.

3. Spreizsitz-Fahrzeug nach Anspruch 1, wobei
der Motor (5) ein Kurbelgehäuse (18) sowie einen Zylinderblock (20) enthält, der an einem oberen Abschnitt des Kurbelgehäuses (18) angeordnet ist, wobei der Kurbelgehäuse-Deckel (19) eine Öffnung des Kurbelgehäuses (18) abdeckt; und
der Behälter (10), in der Fahrzeug-Seitenansicht, vor dem Zylinderblock (20) angeordnet ist.

4. Spreizsitz-Fahrzeug nach Anspruch 1, wobei
der Motor (5) ein Kurbelgehäuse (18), einen Zylinderblock (20), der an einem oberen Abschnitt des Kurbelgehäuses (18) angeordnet ist, sowie einen Zylinderkopf (21) enthält, der mit einem oberen Abschnitt des Zylinderblocks (20) verbunden ist,
wobei der Kurbelgehäuse-Deckel (19) eine Öffnung des Kurbelgehäuses (18) abdeckt; ein Ende des Auspuffrohrs (22) mit dem Zylinderkopf (21) verbunden ist; und
der Behälter (10), in der Fahrzeug-Seitenansicht, unterhalb des einen Endes des Auspuffrohrs (22) angeordnet ist.

5. Spreizsitz-Fahrzeug nach Anspruch 4, wobei
ein Katalysator (23) mit dem anderen Ende des Auspuffrohrs (22) verbunden ist; und ein unterer Abschnitt des Behälters (10), in der Fahrzeug-Seitenansicht, das Auspuffrohr (22) an der dem Katalysator (23) vorgelagerten Seite angeordnet ist.

6. Spreizsitz-Fahrzeug (1) nach Anspruch 1, das des Weiteren umfasst:
eine Anbringungsstruktur (11), die zum Anbringen des Behälters (10) an dem Kurbelgehäuse (18) ausgeführt ist.

7. Spreizsitz-Fahrzeug nach Anspruch 6, wobei
die Anbringungsstruktur (11) einen an dem Kurbelgehäuse (18) vorhandenen ersten aktiven Eingriffsabschnitt (28), eine Halterung (29), die einen ersten passiven Eingriffsabschnitt (32) enthält, mit dem der erste aktive Eingriffsabschnitt (28) in Eingriff ist, sowie ein Halteelement (30) enthält, das zum Halten des Behälters (10) an der Halterung (29) ausgeführt ist.

8. Spreizsitz-Fahrzeug nach Anspruch 7, wobei
der erste aktive Eingriffsabschnitt (28) ein Außengewindeabschnitt (28) ist,
der erste passive Eingriffsabschnitt (32) ein Lochabschnitt (32) ist, über den der Außengewindeabschnitt (28) eingeführt ist;
die Halterung (29) an dem Kurbelgehäuse (18) angebracht wird, indem eine Mutter in einem Zustand auf den Außengewindeabschnitt (28) aufgeschraubt wird, in dem der Außengewindeabschnitt (28) über das Loch eingeführt ist.

9. Spreizsitz-Fahrzeug nach Anspruch 7, wobei
die Halterung (29) einen Halterungs-Körper (31) sowie einen an dem Halterungs-Körper (31) vorhandenen zweiten passiven Eingriffsabschnitt enthält;
das Halteelement (30) ein elastisches Element ist und einen zweiten aktiven Eingriffsabschnitt (34) enthält, der elastisch mit dem zweiten passiven Eingriffsabschnitt (33) in Eingriff ist; und
der Behälter (10) von dem Halterungs-Körper (31) und dem Halteelement (30) gehalten wird.

10. Spreizsitz-Fahrzeug nach Anspruch 1, wobei
der Behälter (10) einen Behälter-Körper (25), einen Zuleitanschluss (26), der in einem oberen Abschnitt des Behälter-Körpers (25) vorhanden und so ausgeführt ist, dass er den Kraftstoffnebel aus dem Kraftstofftank (4) in das Innere des Behälter-Körpers (25) leitet, sowie einen Ableitanschluss (27) enthält, der in dem oberen Abschnitt des Behälter-Körpers (25) vorhanden und so ausgeführt ist, dass er Kraftstoff von dem Behälter-Körper (25) zu dem Motor (5) leitet.

11. Spreizsitz-Fahrzeug nach einem der Ansprüche 1 bis 10,
wobei der Behälter (10) und der Motor (5) als eine Motor-Baugruppe an dem Rahmen (2) in einem Zustand angebracht sind, in dem der Behälter (10) an dem Motor (5) angebracht ist.

## Revendications

1. Véhicule à selle (1) comprenant :
un châssis (2) ;
un réservoir de carburant (4) qui est monté sur le châssis (2) ;
une béquille latérale (8) qui est montée sur le châssis (2) sur un côté considéré en premier dans une direction de largeur du véhicule ;
un moteur (5) qui est monté sur le châssis (2) et qui inclut un capot de carter (19) ;
un tuyau d'échappement (22) qui est connecté au moteur et qui est disposé sur l'autre côté dans la direction de largeur du véhicule ; et un conteneur sensiblement cylindrique ou canister (10) qui reçoit la vapeur de carburant en provenance du réservoir de carburant (4) ; le canister (10) est disposé à l'intérieur d'une surface externe du capot de carter (19) et il fait face au tuyau d'échappement (22) selon une vue avant du véhicule ; et
le canister (10) est monté sur le moteur (5) de telle sorte qu'une partie supérieure du canister (10) et une partie inférieure du canister (10) chevauchent le tuyau d'échappement (22) selon une vue de côté du véhicule,
**caractérisé en ce que** le canister (10) est en totalité disposé sur le côté considéré en premier dans la direction de largeur du véhicule à l'avant du capot de carter (19) selon une vue de côté du véhicule.

2. Véhicule à selle selon la revendication 1, dans lequel :
le canister (10) est disposé de manière à ce qu'il fasse face au tuyau d'échappement (22) selon la vue avant du véhicule de telle sorte que le canister (10) et le tuyau d'échappement (22) ne chevauchent pas le châssis selon la vue de côté du véhicule.

3. Véhicule à selle selon la revendication 1, dans lequel :
le moteur (5) inclut un carter (18), le capot de carter (19) qui recouvre une ouverture du carter (18) et un bloc cylindre (20) qui est disposé sur une partie supérieure du carter (18) ; et
le canister (10) est disposé à l'avant du bloc cylindre (20) selon la vue de côté du véhicule.

4. Véhicule à selle selon la revendication 1, dans lequel :
le moteur (5) inclut un carter (18), le capot de carter (19) qui recouvre une ouverture du carter (18), un bloc cylindre (20) qui est disposé sur une partie supérieure du carter (18) et une tête de cylindre ou culasse (21) qui est connectée à une partie supérieure du bloc cylindre (20) ;
une extrémité considérée en premier du tuyau d'échappement (22) est connectée à la culasse (21) ; et
le canister (10) est disposé au-dessous de l'extrémité considérée en premier du tuyau d'échappement (22) selon la vue de côté du véhicule.

5. Véhicule à selle selon la revendication 4, dans lequel :
un catalyseur (23) est connecté à l'autre extrémité du tuyau d'échappement (22) ; et
une partie inférieure du canister (10) chevauche le tuyau d'échappement (22) sur le côté amont du catalyseur (23) selon la vue de côté du véhicule.

6. Véhicule à selle selon la revendication 1, comprenant en outre :
une structure de montage (11) qui est configurée pour monter le canister (10) par rapport au carter (18).

7. Véhicule à selle selon la revendication 6, dans lequel :
la structure de montage (11) inclut une première partie d'engagement (28) qui est prévue sur le carter (18), un moyen de support (29) qui inclut une première partie engagée (32) avec laquelle la première partie d'engagement (28) est engagée et un élément de support et de maintien (30) qui est configuré pour supporter et maintenir le canister (10) par rapport au moyen de support (29).

8. Véhicule à selle selon la revendication 7, dans lequel :
la première partie d'engagement (28) est une partie filetée mâle (28);
la première partie engagée (32) est une partie à trou (32) au travers de laquelle la partie filetée mâle (28) est insérée ; et
le moyen de support (29) est monté sur le carter (18) en vissant un écrou sur la partie filetée mâle (28) dans un état dans lequel la partie filetée mâle (28) est insérée au travers du trou.

9. Véhicule à selle selon la revendication 7, dans lequel :
le moyen de support (29) inclut un corps de moyen de support (31) et une seconde partie engagée qui est prévue sur le corps de moyen de support (31) ;
l'élément de support et de maintien (30) est un élément élastique et il inclut une seconde partie d'engagement (34) qui est engagée de façon élastique avec la seconde partie engagée (33) ; et
le canister (10) est supporté et maintenu par le corps de moyen de support (31) et par l'élément de support et de maintien (30).

10. Véhicule à selle selon la revendication 1, dans lequel :
le canister (10) inclut un corps de canister (25), un orifice de charge (26) qui est prévu dans une partie supérieure du corps de canister (25) et qui est configuré pour guider la vapeur de carburant en provenance du réservoir de carburant (4) jusqu'à l'intérieur du corps de canister (25), et un orifice de purge (27) qui est prévu dans la partie supérieure du corps de canister (25) et qui est configuré pour guider le carburant du corps de canister (25) jusqu'au moteur (5).

11. Véhicule à selle selon l'une quelconque des revendications 1 à 10, dans lequel :
le canister (10) et le moteur (5) sont montés sur le châssis (2) en tant qu'ensemble moteur dans un état dans lequel le canister (10) est monté sur le moteur (5).
